Europäisches Patentamt

European Patent Office

Office européen des brevets

(19)

(11) Numéro de publication : **0 512 915 A1**

(12) # DEMANDE DE BREVET EUROPEEN

(21) Numéro de dépôt : **92401258.6**

(51) Int. Cl.⁵ : **G11B 11/10**

(22) Date de dépôt : **05.05.92**

(30) Priorité : **07.05.91 FR 9105622**

(43) Date de publication de la demande :
**11.11.92 Bulletin 92/46**

(84) Etats contractants désignés :
**DE GB IT NL**

(71) Demandeur : **COMMISSARIAT A L'ENERGIE ATOMIQUE**
**31-33, rue de la Fédération**
**F-75015 Paris (FR)**

(72) Inventeur : **Fedeli, Jean-Marc**
**Le Mollard**
**F-38140 Beaucroissant (FR)**
Inventeur : **Jouve, Hubert**
**Domaine des Plantées**
**F-38220 Biviers (FR)**
Inventeur : **Renard, Stéphane**
**Le Village**
**F-38560 Champ-Sur-Drac (FR)**
Inventeur : **Valette, Serge**
**41, rue des Eaux Claires**
**F-38100 Grenoble (FR)**

(74) Mandataire : **Mongrédien, André et al**
**c/o BREVATOME 25, rue de Ponthieu**
**F-75008 Paris (FR)**

(54) **Tête magnéto-optique intégrée de lecture et d'écriture et procédé de réalisation.**

(57) Tête magnéto-optique intégrée de lecture et d'écriture et procédé de fabrication.

Le pôle (P) est décalé transversalement (Dt) par rapport au plan de sortie optique (36). Le champ magnétique (H) se trouve augmenté relativement en regard de la sortie optique (SO) et le rapport des champs en regard du pôle (P) et en regard de la sortie optique (SO) est abaissé.

Application à l'enregistrement d'informations, notamment sur disque.

FIG. 3

Jouve, 18, rue Saint-Denis, 75001 PARIS

DESCRIPTION

La présente invention a pour objet une tête magnéto-optique intégrée de lecture et d'écriture et un procédé de réalisation d'une telle tête.

Les dispositifs magnéto-optiques comportent généralement trois composants essentiels, à savoir un support d'enregistrement, une tête optique et une tête magnétique :

1. le support d'enregistrement :

Le support d'enregistrement, en matériau magnéto-optique, est capable de figer, sous forme de domaines magnétiques, des informations binaires correspondant à l'orientation de l'aimantation du matériau, soit vers la droite ou vers la gauche (pour l'enregistrement dit parallèle), soit vers le haut ou vers le bas (pour l'enregistrement perpendiculaire). Les domaines sont de petite taille (environ 1 micron carré).

Ces domaines sont susceptibles de s'orienter dans le même sens qu'un champ magnétique extérieur si celui-ci est supérieur à un champ critique, spécifique du matériau, dit champ coercitif et noté Hc.

Ce champ coercitif représente en quelque sorte la résistance à la variation d'orientation des domaines sous l'effet d'un champ extérieur.

Pour un domaine orienté dans un sens considéré arbitrairement comme positif, un champ extérieur ne pourra faire basculer ce domaine selon une orientation négative que si ce champ prend une valeur négative inférieure -Hc.

Pour réorienter le domaine dans le sens positif, le champ magnétique extérieur devra augmenter pour prendre une valeur positive plus grande que +Hc.

Une deuxième propriété d'un matériau magnétooptique est que son champ coercitif diminue lorsque la température s'élève de l'ambiante (20°C) à une valeur comprise par exemple entre 100°C et 300°C.

Cette diminution du champ coercitif avec la température permet de commander le basculement de l'aimantation. A cet effet, on applique un champ magnétique extérieur de sens inverse à l'orientation initiale du support et de valeur supérieure au champ coercitif à chaud mais inférieure au champ coercitif à la température ambiante. Un faisceau laser est focalisé sur la zone à traiter pour chauffer localement le matériau.

Une troisième propriété essentielle pour un matériau magnéto-optique est de conduire à un bon signal optique de détection. Ce signal de détection est généralement dû à une rotation angulaire du plan de polarisation de l'onde lumineuse lors de sa réflexion sur le matériau. La valeur et le signe de cette rotation sont différents suivant le sens de l'orientation de l'aimantation ce qui se traduira par un "1" ou un "0".

Cette rotation peut se produire à l'interface du matériau magnéto-optique avec l'air (effet KERR) ou au cours de la traversée du matériau (effet FARADAY).

Dans le cas d'un matériau transparent déposé sur un réflecteur, le signal est une réponse aux deux effets KERR et FARADAY combinés.

Le signal magnéto-optique détecté est proportionnel à l'angle de rotation du plan de polarisation à la réflexion sur le matériau.

2. La tête optique :

La tête optique remplit deux fonctions, l'une d'écriture, l'autre de lecture :
- en écriture : elle doit focaliser le rayonnement lumineux issu d'une source de lumière (diode laser par exemple) sur une surface la plus petite possible pour chauffer une zone du support et uniquement cette zone afin de provoquer un basculement de l'aimantation sous champ magnétique extérieur,
- en lecture : elle doit analyser le faisceau réfléchi par le support et traduire la rotation du plan de polarisation en une variation de signal électrique, à l'aide de photodétecteurs par exemple.

3. La tête magnétique :

Une tête magnétique est nécessaire, à l'écriture, pour appliquer au matériau un champ de basculement. La valeur du champ devra être suffisante mais rester inférieure au champ coercitif du matériau à la température ambiante, de manière à ne pas effacer ou dégrader les enregistrements existants sur les pistes adjacentes.

Le sens du champ magnétique est celui qu'on veut donner aux domaines pendant l'écriture.

Ces trois composants (support d'enregistrement, tête optique, tête magnétique) peuvent être assemblés de différentes manières. En particulier, la tête optique peut être réalisée de manière intégrée comme décrit par exemple dans le document de brevet français FR-A-2 606 921 (ou son correspondant américain US-A-4 796 226).

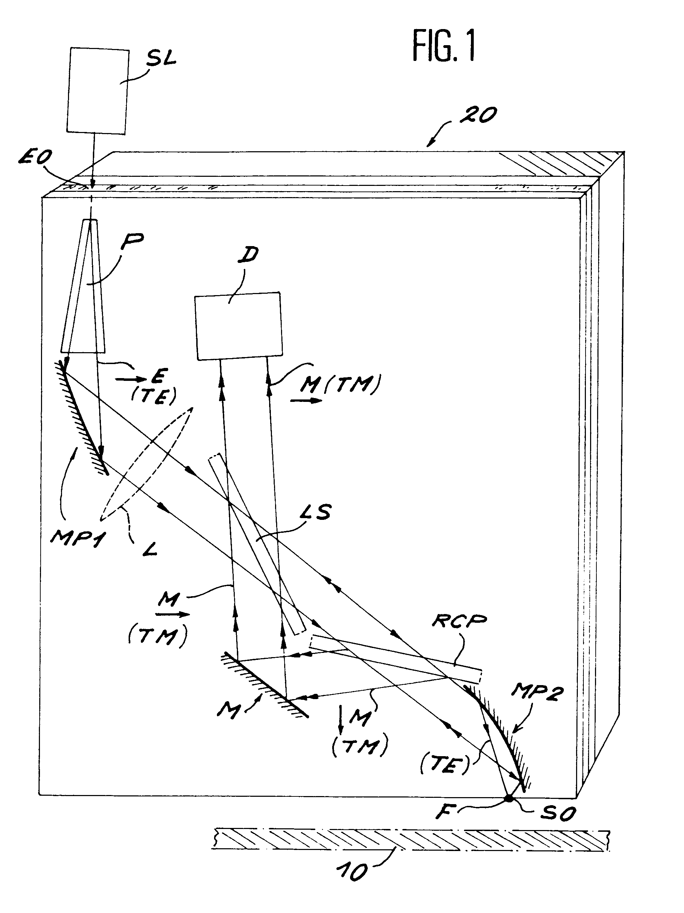

La figure 1 annexée rappelle l'essentiel de la structure d'un tel composant.

Le dispositif représenté sur cette figure comprend une source lumineuse SL et une structure de guidage 20 comprenant une entrée optique EO, un polariseur P, une optique de collimation constituée par un miroir cylindrique à section parabolique MP1, un miroir cylindrique à section parabolique MP2, une sortie optique SO où le miroir MP2 focalise la lumière qu'il reçoit, un réseau convertisseur de polarisation RCP, un miroir M placé sur le trajet du faisceau diffracté par le réseau RCP, une lame semi-transparente LS, recombinant le faisceau qu'elle réfléchit partiellement avec le faisceau provenant du miroir M et un photodétecteur D.

Le fonctionnement de ce dispositif est complètement décrit dans le document FR-A-2 606 991 (US-A-4 796 226).

En fonctionnement, cette structure est collée verticalement à l'arrière d'un patin de vol qui maintient le plan de la sortie optique à distance du support d'enregistrement (de l'ordre du micromètre ou légèrement inférieure).

Pour qu'un tel composant puisse fonctionner aussi en écriture, il faut lui associer une tête magnétique apte à créer un champ magnétique supérieur au champ coercitif du support dans la zone éclairée à la température atteinte dans cette zone, mais inférieur au champ coercitif du support dans les zones non illuminées qui sont à température ambiante.

Le document EP-A-0 338 864 décrit une tête de lecture et d'écriture intégrée qui comprend à la fois un sous-ensemble optique (qui n'est d'ailleurs pas du type précédemment décrit mais qui fait usage de microguides comparables à des fibres optiques) et un sous-ensemble magnétique, le tout intégré sur un même substrat.

La figure 18 de ce document, en particulier, montre une vue générale de la tête magnéto-optique et la figure 19 représente une coupe de l'empilement circuit optique-circuit magnétique. On y trouve des guides optiques (244 et 245) et un circuit magnétique intégré en couches minces, avec une pièce polaire inférieure (252), un bobinage électrique (254) et une pièce polaire supérieure (257). Le circuit décrit est un circuit à entrefer ("gap") référencé g.

La réalisation d'une telle tête, est telle que la sortie du guide optique et l'extrémité des pièces polaires se trouvent dans le même plan (référence 81). Ce plan est obtenu par polissage de l'empilement après découpe.

Les pôles magnétiques et la sortie optique sont donc décalés longitudinalement (c'est-à-dire dans le sens de déplacement relatif de la tête et du support ou, si l'on veut, dans le sens de la piste enregistrée). Il résulte de ce décalage longitudinal que le champ n'a pas la même valeur en face des pôles qu'en face de la sortie optique.

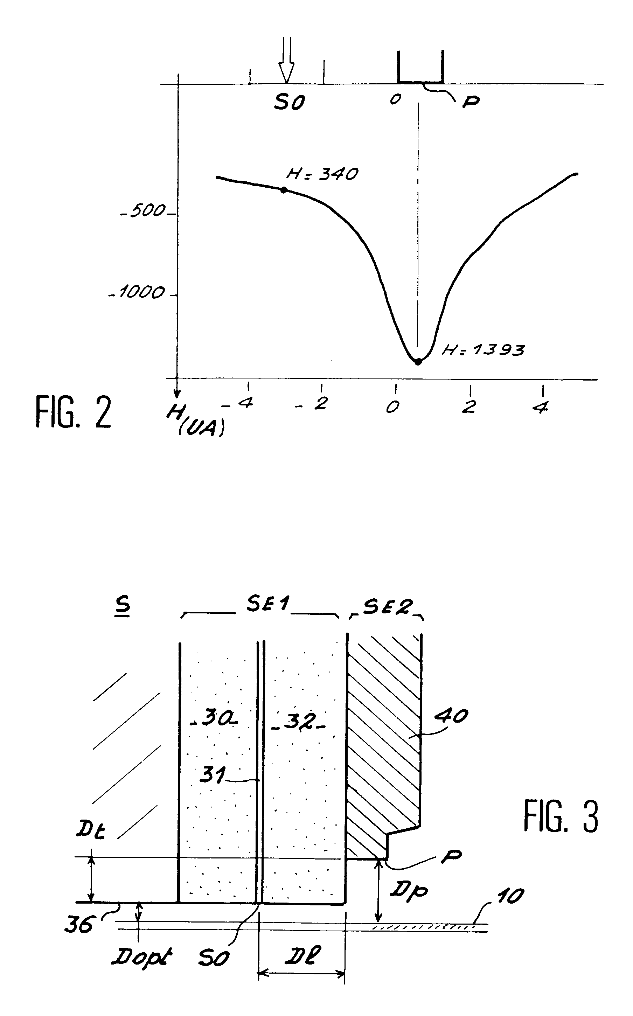

La figure 2 annexée illustre ce phénomène. Sur cette figure, on voit la variation du champ magnétique (porté en ordonnées et mesuré en unités arbitraires UA) créé par un pôle P en fonction de la distance portée en abscisses et comptée en micromètres à compter du bord du pôle. Dans le cas illustré, la sortie optique SO est à 3 $\mu$m du pôle P, la distance entre le plan de sortie de la tête et le support étant de 0,5 $\mu$m.

On voit que le champ magnétique a la valeur 1393 UA à l'aplomb du pôle P alors que cette valeur tombe à 340 UA à l'aplomb de la sortie optique, soit un rapport R voisin de 4.

Ce phénomène nécessite que le matériau magnéto-optique utilisé présente, en plus des propriétés habituelles propres à ce genre d'application, une très grande variation du champ coercitif en fonction de la température, puisque ce champ coercitif doit être inférieur à 340 UA à la température atteinte face à la sortie optique, tout en étant supérieur à 1393 UA à la température ambiante. Cette contrainte limite considérablement le choix des matériaux magnéto-optiques aptes à fonctionner en lecture et en écriture.

La présente invention a justement pour but de remédier à cet inconvénient. A cette fin, elle propose une tête d'écriture et de lecture pour laquelle le rapport R entre le champ à l'aplomb du pôle et le champ à l'aplomb de la sortie optique est plus faible que dans l'art antérieur ce qui réduit la contrainte évoquée plus haut tout en assurant un champ plus intense en regard de la sortie optique.

Ce résultat est obtenu en modifiant la structure du sous-ensemble magnétique d'écriture de telle sorte que le pôle n'affleure plus sur le plan de sortie optique, mais est légèrement en retrait par rapport à ce plan. Ce décalage peut être qualifié de transversal, dans la mesure où il a lieu dans la direction perpendiculaire au plan de sortie, par opposition au décalage longitudinal connu qui subsiste et qui a lieu parallèlement à ce plan.

La valeur optimale du retrait dépend de la nature du matériau magnéto-optique :

- si le matériau présente une grande différence de champ coercitif entre la température ambiante et la température obtenue par chauffage optique, le rapport R importe assez peu et la distance séparant le pôle du plan de sortie du sous-ensemble optique sera ajustée de telle manière que le champ magnétique soit maximum en regard de la sortie optique. On obtiendra ainsi un courant d'excitation minimum pour faire basculer l'aimantation des domaines,

- dans le cas contraire, l'écart entre le pôle et le plan de sortie optique devra être suffisant pour que le rapport R des champs soit assez faible et en tout cas inférieur au rapport des champs coercitifs à température ambiante (sous le pôle) et à la température d'écriture (sous la sortie optique).

A titre purement explicatif, et comme on le comprendra mieux par la suite, on pourra prendre comme décalage transversal environ 1,5 à 1,8 $\mu$m et par exemple 1,7 $\mu$m dans le premier cas et environ 2,5 à 3 $\mu$m et par exemple 2,7 $\mu$m dans le second.

De façon précise, l'invention a pour objet une tête magnéto-optique intégrée de lecture et d'écriture sur un support d'enregistrement magnétique, cette tête comprenant deux sous-ensembles intégrés juxtaposés et intégrés sur un même substrat, à savoir :
- un premier sous-ensemble optique comprenant une entrée optique apte à recevoir un rayonnement optique, une sortie optique disposée dans un plan de sortie, des premiers moyens de guidage optique entre l'entrée et la sortie, un photodétecteur, des seconds moyens de guidage optique entre la sortie et le photodétecteur,

- un second sous-ensemble magnétique, comprenant un circuit magnétique avec au moins une pièce polaire disposée dans un plan perpendiculaire au plan de sortie, cette pièce polaire présentant un pôle magnétique tourné vers le support d'enregistrement, un enroulement électriquement conducteur entourant ledit circuit magnétique,

cette tête étant caractérisée par le fait que le pôle magnétique est en retrait par rapport au plan de sortie optique, la sortie optique du premier sous-ensemble et le pôle magnétique du second sous-ensemble présentant un décalage transversal.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés sur lesquels :

- la figure 1, déjà décrite, montre un sous-ensemble optique connu,

- la figure 2, déjà décrite, montre la variation du champ magnétique le long d'une tête magnéto-optique de l'art antérieur,

- la figure 3 montre schématiquement et en coupe transversale, la partie essentielle d'une tête conforme à l'invention,

- la figure 4 montre trois courbes de variations du champ pour trois têtes conformes à l'invention,

- les figures 5A, 5B, 5C, 5D, 5E, 5F, 5G, 5H, 5I, 5J montrent des coupes illustrant des étapes de réalisation d'une tête conforme à l'invention,

- la figure 6 montre la tête selon une vue parallèle au plan des couches,

- la figure 7 montre la variation des champs magnétique et optique en regard d'une tête selon l'invention.

On voit, sur la figure 3, en coupe très schématique, un premier sous-ensemble SE1 de caractère optique et un second sous-ensemble SE2 de caractère magnétique juxtaposés et tous deux intégrés sur un substrat S.

Le sous-ensemble optique SE1 comprend essentiellement un guide optique 31 (par exemple en $Si_3N_4$) intercalé entre deux couches 30, 32 (par exemple en $SiO_2$) d'indice de réfraction inférieur à celui du guide 31. Les couches 30, 31, 32 sont par ailleurs transparentes aux longueurs d'onde utilisées. Le substrat S peut être en silicium. Ce sous-ensemble optique présente une sortie optique SO qui affleure sur le plan de sortie 36. La distance entre ce plan et le support d'enregistrement 10 est notée Dopt.

Le second sous-ensemble SE2 comprend un circuit magnétique 40 se terminant par un pôle P tourné vers le support d'enregistrement 10. La distance entre ce pôle P est le support est notée Dp. Un écart longitudinal DI sépare la sortie optique SO du bord du pôle P.

Selon l'invention, ce pôle est en retrait par rapport au plan de sortie 30. L'écart transversal entre le pôle et ce plan est noté Dt.

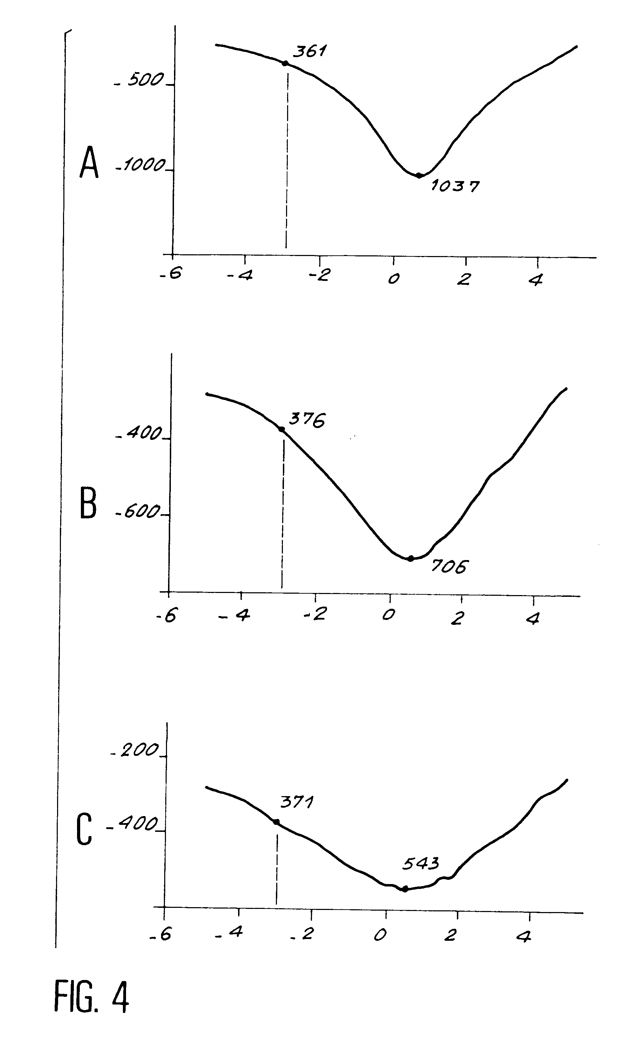

Les courbes A, B, C de la figure 4 montrent trois variations du champ magnétique dans la direction longitudinale. Les unités sont encore arbitraires (mais identiques à celles de la figure 2 déjà décrite) et les distances sont exprimées en micromètres.

Les caractéristiques géométriques de la tête (exprimées en microns), pour ces trois cas particuliers étaient les suivantes, Hp désignant le champ en regard du pôle et Hso le champ en regard de la sortie optique supposée écartée longitudinalement de 3 $\mu$m du pôle :

Courbe A :
Dopt = 0,3
Dp = 1
Dt = 0,7
Hp = 1037 UA
Hso = 361 UA
R = 2,8,

Courbe B :
Dopt = 0,3
Dp = 2
Dt = 1,7
Hp = 706 UA
Hso = 376 UA
R = 1,87,

Courbe C :
Dopt = 0,3
Dp = 3
Dt = 2,7
Hp = 543 UA
Hso = 371 UA
R = 1,5.

On voit que le champ Hso en regard de la sortie optique présente un maximum pour la courbe B, c'est-à-dire pour Dp=2. Dans cette situation, le rapport R des champs présente la valeur 1,87, très inférieure à la valeur 4 obtenue dans l'art antérieur. On pourra donc choisir un écart transversal Dt de 1,7 $\mu$m entre le pôle et le plan optique, ce qui, à la fois, améliorera la valeur du champ sous la sortie optique et réduira la contrainte sur les rapports des champs coercitifs.

Le sous-ensemble optique peut être obtenu comme déjà décrit dans le document FR-A-2 606 921 (US-A-4 796 226) déjà cité. Le pôle magnétique en retrait peut être obtenu par tout moyen connu. Il suffit, au cours de l'opération de photogravure devant dessiner la pièce polaire, de graver celle-ci de telle sorte que le pôle soit en retrait par rapport au plan de sortie du sous-ensemble optique.

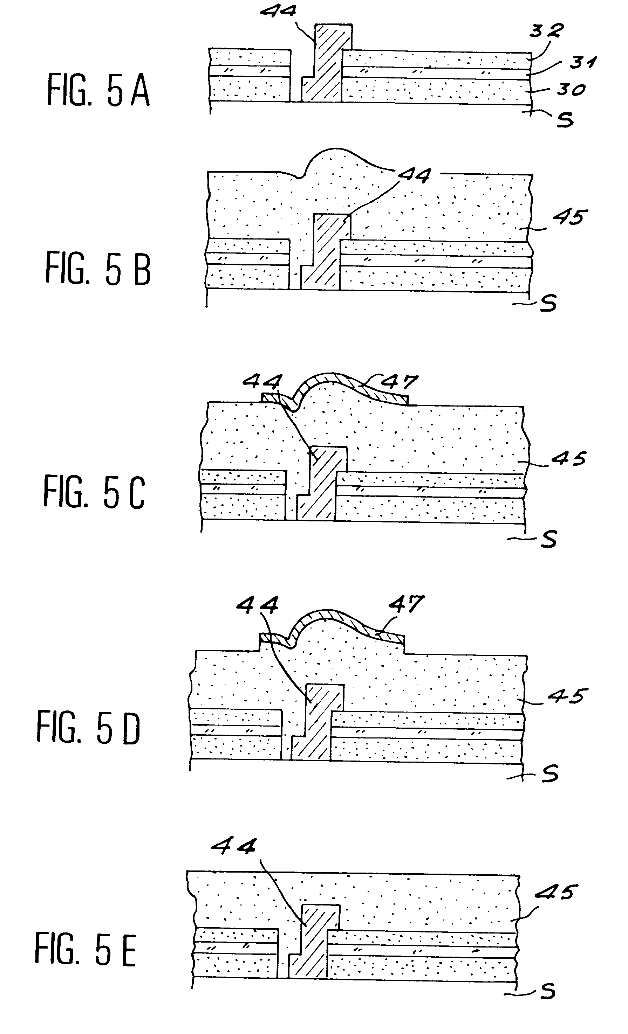

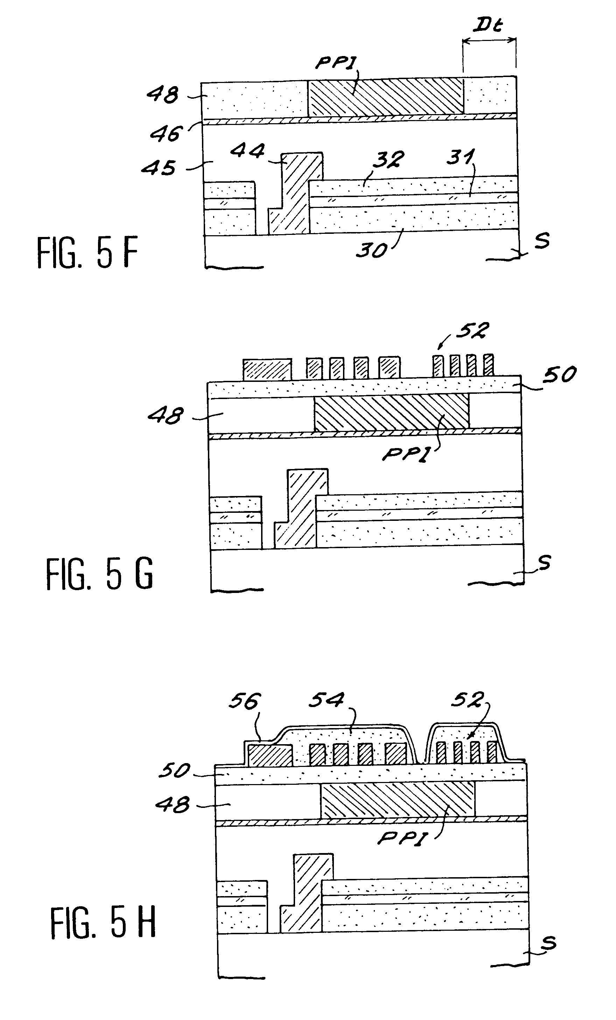

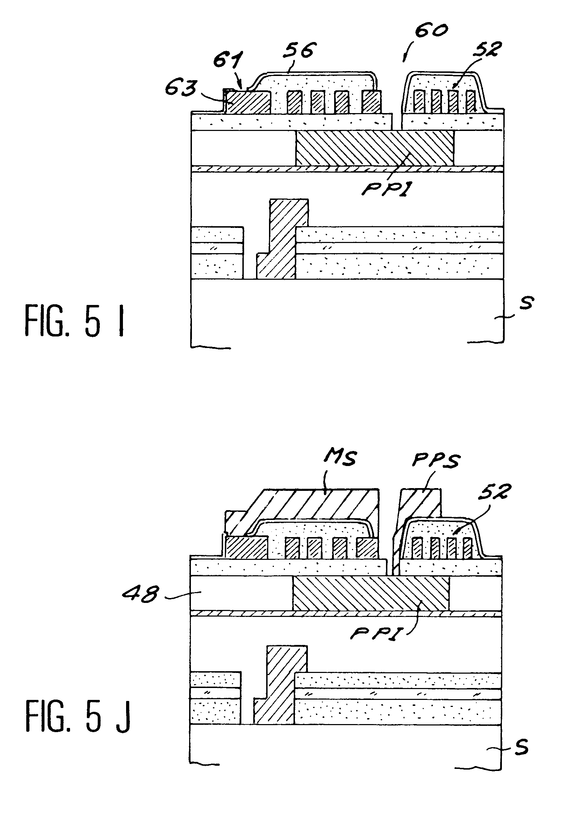

A titre d'exemple, les figures 5A à 5J montrent quelques étapes d'un procédé de réalisation pouvant être employé pour obtenir une tête conforme à l'invention. La tête est représentée en coupe transversale et est tournée de 90° par rapport à la figure 3, le support d'enregistrement étant supposé placé à droite de la tête et défiler verticalement.

Le sous-ensemble optique (Figure 5A) est obtenu par empilement de couches diélectriques transparentes aux longueurs d'onde utilisées. Elles peuvent être, par exemple :

- une première couche de silice 30 obtenue par oxydation thermique d'un substrat en silicium, à une température de l'ordre de 950 à 1000°C, l'épaisseur pouvant être de l'ordre de 2 µm,

- une deuxième couche 31 de nitrure de silicium, $Si_3N_4$, déposée par voie chimique en phase vapeur, à une température de l'ordre de 800°C, l'épaisseur pouvant être de 0,1 à 0,35 µm,

- une troisième couche 32 de silice, $SiO_2$, déposée par voie chimique en phase vapeur assistée par plasma à une température de l'ordre de 350 à 500°C, l'épaisseur pouvant être de 2 à plusieurs micromètres.

Cette étape peut être considérée comme une étape "à haute température" par rapport au procédé de réalisation de la tête magnétique.

On réalise par ailleurs par dépôt et gravure un miroir métallisé 44, parabolique (correspondant au miroir MP2 de la figure 1). L'ensemble obtenu est représenté sur la figure 5A.

Sur cet ensemble est déposée ensuite une couche isolante 45, telle qu'une couche de $SiO_2$ d'environ 5 µm (figure 5B).

Cette couche 45 doit être planarisée et polie. Cette opération est délicate s'il existe des motifs en creux par rapport au plan majoritaire du circuit (c'est le cas des trous associés aux miroirs tels que 44). En effet, dans ce cas, il faut enlever la majorité de la masse du circuit par polissage pour se ramener au niveau le plus bas du circuit.

Selon l'invention, on réalise, avant polissage du plan supérieur du circuit, les étapes suivantes :

- on protège à l'aide de motifs en résine 47 les composantes en creux (partie de la couche 45 recouvrant les miroirs (figure 5C) ;

- on grave (par gravure sèche RIE par exemple) la couche 45 où elle n'est pas protégée, d'une épaisseur suffisante pour que le plan supérieur majoritaire se retrouve en dessous des motifs (figure 5D).

Ainsi, lors du polissage, les motifs minoritaires seront abrasés jusqu'au niveau du plan majoritaire, la résine étant éliminée généralement avant polissage (figure 5E).

Sur la couche 45 planarisée et polie, on dépose ensuite une couche métallique 46, par exemple en or, puis une couche isolante 48, par exemple en $SiO_2$ (figure 5F).

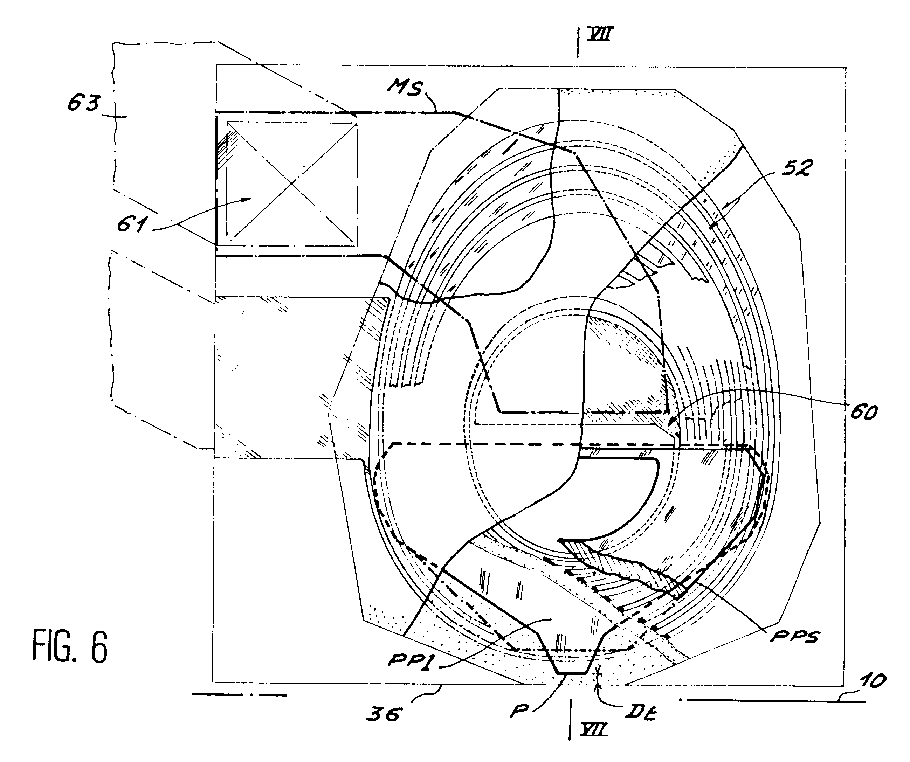

On réalise ensuite une pièce polaire inférieure PPI, qui peut être par exemple en alliage FeNi, d'épaisseur 2 µm, par exemple par électrolyse, après avoir formé dans la couche isolante 48, un caisson par gravure selon le motif représenté figure 6. Le bord droit du caisson est en retrait par rapport au bord du sous-ensemble optique pour que le pôle final soit en retrait par rapport au plan optique. Cette pièce polaire inférieure peut être également réalisée par pulvérisation cathodique. Dans ce cas, le matériau magnétique (FeNi) peut être déposé selon une pleine couche, directement sur la couche 45 (suppression possible de la couche 46) puis être gravé par photolithographie selon le motif de la figure 6, la couche 48 étant alors déposée puis gravée après réalisation de la pièce polaire inférieure PPI. Dans le cas d'une réalisation de la pièce polaire par gravure, cette gravure est telle que le pôle soit en retrait par rapport au plan optique du sous-ensemble.

On dépose sur l'ensemble obtenu (figure 5G), une couche diélectrique 50 qui peut être par exemple de la silice $SiO_2$, d'épaisseur 1 µm. On forme ensuite un enroulement conducteur 52, par exemple en cuivre, par évaporation d'une couche d'épaisseur 2 µm par exemple, puis gravure de cette couche suivant un motif en spirale.

Une couche isolante 54 planarisante et éventuellement une couche de protection isolante 56 sont ensuite déposées, par exemple en résine pour la couche 54 (2 µm par exemple) et en silice évaporée (0,1 µm, par exemple) pour la couche 56 (figure 5H).

Ces couches 56, 54, 50 sont gravées (figure 5I) pour former des ouvertures (références 60, 61) pour la fermeture du circuit magnétique des pièces polaires et la connexion du circuit électrique de l'enroulement. La référence 60 correspond à une seule ouverture sur la figure 5I, mais bien entendu, pour isoler le contact sur la bobine et le contact sur la pièce polaire inférieure la référence 60 peut correspondre à deux ouvertures distinctes réalisées dans les couches 56 et 54.

Une pièce polaire supérieure PPS et un motif supplémentaire MS, par exemple en FeNi, d'épaisseur 1 µm par exemple, sont ensuite réalisés (figure 5J) suivant des motifs qui apparaissent sur la figure 6. Le mode de réalisation de la pièce polaire supérieure peut être du même type que celui de la pièce polaire inférieure, c'est-à-dire soit par électrolyse avec utilisation d'une couche métallique supplémentaire, soit par pulvérisation cathodique.

On peut noter sur la figure 6 que le motif supplémentaire MS réalisé au même niveau que la pièce polaire supérieure PPS sert de connexion de fermeture de la bobine, c'est-à-dire qu'avant le dépôt de la couche constitutive de la pièce polaire supérieure et du motif MS, les trous 60, 61 ont été gravés dans les couches isolantes et de protection pour déboucher sur les plots en cuivre au centre de la bobine et sur une piste de connexion 63 (63 étant un motif particulier de 52). Le motif MS correspond à une bande qui permet de faire le contact électrique entre le centre de la bobine et la piste de connexion à travers les trous de contact et par dessus la couche isolante. La pièce polaire supérieure est en contact avec ou à proximité de la pièce polaire inférieure par l'intermédiaire du trou 60.

Cet empilement s'effectue à une température qui ne dépasse pas 300°C. Tout passage à une plus haute température risquerait de dégrader les propriétés de cette bobine. Cette température limite est bien inférieure aux températures de réalisation du sous-ensemble optique. Ainsi, le sous-ensemble magnétique sera-t-il réalisé sur le sous-ensemble optique et non l'inverse.

Sur la figure 6, on voit mieux la forme des pièces polaires inférieure PPI et supérieure PPS et la forme de l'enroulement.

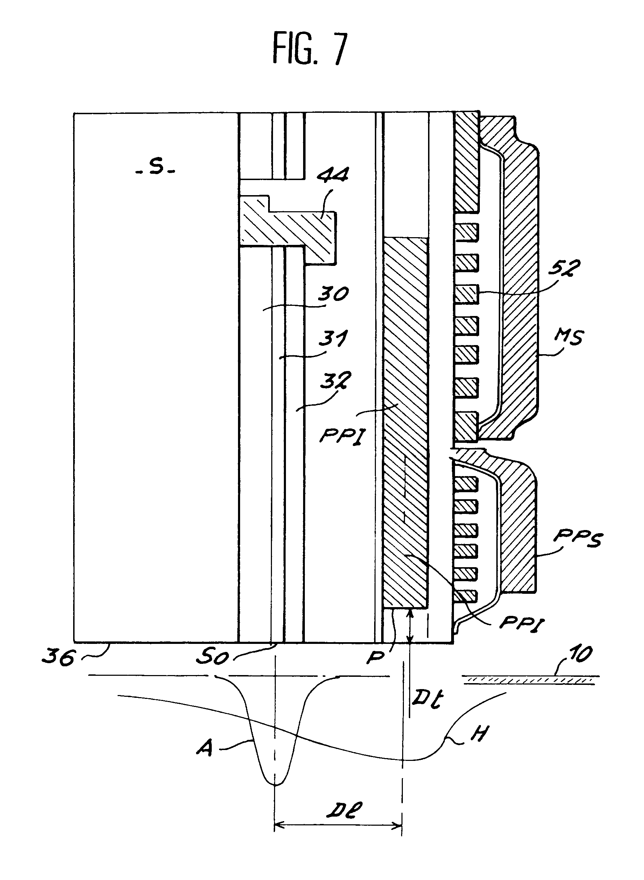

La figure 7 rassemble tous ces éléments et montre clairement le décalage transversal Dt du pôle P par rapport à la sortie optique SO et les variations du champ magnétique H et du champ optique A au niveau du support d'enregistrement 10.

La description qui précède a été faite en supposant que la tête était séparée du support d'enregistrement (écart Dopt). Il va de soi que cette disposition n'est pas obligatoire et que l'invention s'appliquerait aussi bien aux têtes à contact (Dopt=0).

De même, la structure particulière du sous-ensemble magnétique avec une pièce polaire supérieure en retrait de la pièce polaire inférieure n'est nullement nécessaire. On peut appliquer l'invention avec un circuit magnétique qui ne contiendrait qu'une seule pièce polaire autour de laquelle s'enroulerait le bobinage conducteur (disposition dite "monopole" ou encore à "enregistrement perpendiculaire").

La tête de l'invention peut être utilisée avec tout support magnéto-optique, (disque, bande, etc...), rigide ou souple.

Le premier sous-ensemble optique qui a été décrit peut comprendre, dans sa structure et dans son procédé de réalisation, des composants tels que ceux décrits dans la demande de brevet antérieure N° 90 04255 déposée au nom du présent demandeur. De tels composants comportent des cavités remplies d'un fluide ou d'un polymère ayant un indice de réfraction différent de l'indice de réfraction de la couche ou des couches dans laquelle elles sont formées.

Les cavités peuvent constituer en particulier des miroirs. Aussi, une telle cavité peut être substituée au miroir (cavité + couche métallique) tel que décrit par les figures 5A à 5E.

## Revendications

1. Tête magnéto-optique intégrée de lecture et d'écriture sur un support d'enregistrement magnétique (10), cette tête comprenant deux sous-ensembles intégrés sur un même substrat (S), à savoir :

   A) un premier sous-ensemble (SE1), optique, comprenant une entrée optique (EO) apte à recevoir un rayonnement optique, une sortie optique (SO) disposée dans un plan de sortie (36), des premiers moyens de guidage optique (30, 31, 32, MP1, MP2) entre l'entrée (EO) et la sortie (SO), un photodétecteur (D), des seconds moyens de guidage optique entre la sortie (SO) et le photodétecteur (D),

   B) un second sous-ensemble (SE2), magnétique, comprenant un circuit magnétique avec au moins une pièce polaire (PPI) disposée dans un plan perpendiculaire au plan de sortie, cette pièce polaire (PPI) présentant un pôle magnétique (P) tourné vers le support d'enregistrement (10), un enroulement électriquement conducteur (52) entourant ledit circuit magnétique,

   cette tête étant caractérisée par le fait que le pôle magnétique (P) est en retrait par rapport au plan de sortie optique (36), la sortie optique (SO) du premier sous-ensemble (SE1) et le pôle magnétique (P) du second sous-ensemble (SE2) présentant ainsi un décalage transversal (Dt).

2. Procédé de réalisation de la tête magnéto-optique intégrée selon la revendication 1, caractérisée par le fait qu'elle comprend les opérations suivantes :

   A) pour la réalisation du premier sous-ensemble optique (SE1) :
   - sur un substrat (S) dépôt de trois couches diélectriques transparentes à la longueur d'onde utilisée pour former un empilement (30,31,32) de guidage optique ;
   - réalisation de miroirs (MP1,MP2) ;
   - dépôt d'une couche isolante (45) sur l'ensemble ;
   - planarisation et polissage de ladite couche isolante (45) ;

   B) pour la réalisation du second sous-ensemble magnétique (SE2) :
   - réalisation d'une pièce polaire inférieure (PPI) avec un pôle en retrait par rapport au plan du premier sous-ensemble (SE1) ;
   - dépôt d'une couche isolante (50) sur l'ensemble ;
   - formation d'un enroulement conducteur (52) ;
   - dépôt d'au moins une couche isolante (54,56) ;
   - gravure des couches isolantes (50,54,56) pour former des ouvertures (60,61) permettant d'accéder à la pièce polaire inférieure (60) et à l'enroulement (61) ;
   - réalisation éventuellement d'une pièce polaire supérieure (PPS) ;
   - réalisation d'un motif supplémentaire dans le plan de la pièce polaire supérieure servant de connexion de fermeture de l'enroulement conducteur.

3. Procédé selon la revendication 2, caractérisé par le fait que la pièce polaire inférieure (PPI) est réalisée par dépôt électrolytique après dépôt d'une couche métallique supplémentaire (46) et formation d'un caisson dans une couche isolante (48), le bord du caisson étant en retrait par rapport au pôle de sortie du premier sous-ensemble optique.

4. Procédé selon la revendication 2, caractérisé par le fait que la pièce polaire inférieure (PPI) est réalisée par pulvérisation cathodique d'une couche puis gravure de cette couche pour laisser un pôle en retrait par rapport au plan optique de sortie du premier sous-ensemble.

5. Procédé selon la revendication 2, caractérisé par le fait que pour planariser et polir la couche isolante (45) du premier sous-ensemble optique on dépose sur cette couche (45) à l'endroit où apparaissent des motifs en creux, les miroirs, des masques en résine (47), on grave la couche isolante (45) autour de ces masques, on enlève la résine et on planarise la couche (45).

# FIG. 1

FIG. 2

FIG. 3

FIG. 4

FIG. 5 A

44    32
31
30
S

FIG. 5 B

44    45
S

FIG. 5 C

44    47    45
S

FIG. 5 D

44    47    45
S

FIG. 5 E

44    45
S

FIG. 5 F

FIG. 5 G

FIG. 5 H

FIG. 5 I

FIG. 5 J

FIG. 6

EP 0 512 915 A1

# FIG. 7

Office européen
des brevets

# RAPPORT DE RECHERCHE EUROPEENNE

Numero de la demande

EP    92 40 1258

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A,D | EP-A-0 338 864 (SONY CORP.) <br> * le document en entier * <br> --- | 1,2 | G11B11/10 |
| A | PATENT ABSTRACTS OF JAPAN <br> vol. 14, no. 405 (P-1100)(4348) 31 Août 1990 <br> & JP-A-02 156 450 ( CANON INC ) 15 Juin 1990 <br> --- | | |
| A | PATENT ABSTRACTS OF JAPAN <br> vol. 12, no. 494 (P-805)(3341) 23 Décembre 1988 <br> & JP-A-63 204 532 ( MATSUSHITA ELECTRIC IND CO LTD ) 24 Août 1988 <br> --- | | |
| A | PATENT ABSTRACTS OF JAPAN <br> vol. 13, no. 452 (P-943)(3800) 12 Octobre 1989 <br> & JP-A-01 173 402 ( MITSUBISHI ELECTRIC CORP ) 10 Juillet 1989 <br> ----- | | |

**DOMAINES TECHNIQUES RECHERCHES (Int. Cl.5 )**

G11B

Le présent rapport a été établi pour toutes les revendications

| Lieu de la recherche | Date d'achèvement de la recherche | Examinateur |
|---|---|---|
| LA HAYE | 13 AOUT 1992 | John D. FUX |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

16